# FASCICULE DE BREVET EUROPEEN

(11) **EP 0 406 090 B1**
(45) Date de publication et mention de la délivrance du brevet: **12.05.1993**
(21) Numéro de dépôt: 90401804.1
(22) Date de dépôt: 25.06.1990
(51) Int. Cl.: A23G 3/22, A23G 1/18

(54) **Dispositif pour le traitement thermique d'un produit liquide solidifiable et installation de confection d'articles de confiserie, telle qu'enrobeuse ou mouleuse, équipée d'un dispositif de ce type**
Einrichtung zur Wärmebehandlung eines erstarrbaren flüssigen Produktes und damit versehene Süsswareneinrichtung, wie eine Überzugs- und Abgussmaschine
Apparatus for heat treatment of liquids able to solidify, and confectionary machine provided with the same, such as coating and moulding machine

(30) Priorité: 28.06.1989 FR 8908631
(43) Date de publication de la demande: 02.01.1991
(73) Titulaire: SAVY ET GOISEAU, F-78130 Les Mureaux (FR)
(72) Inventeur: Goiseau, Didier Georges Louis, F-78540 Vernouillet (FR)
(74) Mandataire: Kedinger, Jean-Paul

(56) Documents cités:
- DE-A- 2 322 838
- FR-A- 580 702
- GB-A- 1 122 461

## Description

La présente invention a trait à un dispositif pour le traitement thermique d'un produit liquide solidifiable, du type comprenant un espace de réception pour ce dernier, défini par une paroi d'échange thermique avec au moins une enceinte environnante dans laquelle de l'air peut être déplacé par un ventilateur associé à un moyen de chauffage.

De tels dispositifs, appelés aussi "tempéreuses" se retrouvent en particulier dans les installations pour la confection d'articles de confiserie, notamment les enrobeuses, dans lesquelles ils servent alors à soumettre le chocolat ou autre produit de couverture, à un traitement thermique cyclique par circulation d'air chaud entrecoupée de phases de refroidissement, optimalisant sa fusion et sa cristallisation.

Cependant, dans les seuls dispositifs connus de traitement thermique, le ventilateur puise l'air dans l'environnement extérieur pour le refouler dans l'enceinte d'où il ressort par une ouverture pratiquée à l'autre bout de celle-ci, après avoir été chauffé et mis en circulation à travers son volume intérieur. Cette opération se déroulant en continu, souvent à longueur de journée, il en résulte inévitablement une forte élévation de la température ambiante dans le local de travail, particulièrement incommodante pour le personnel de service. Par ailleurs, l'air extérieur étant réchauffé, il est impossible de le réutiliser pour la phase de refroidissement du processus de traitement thermique.

La présente invention se propose de remédier à cet inconvénient et, pour ce faire, elle a pour objet un dispositif de traitement thermique du type spécifié en introduction, qui se caractérise en ce que le ventilateur est inséré, avec le moyen de chauffage, à l'intérieur d'un circuit fermé de déplacement d'air, constitué en partie au moins par ladite enceinte et associé à un moyen de mise en communication sélective avec l'atmosphère conçu pour, en position active, libérer une ouverture d'admission et une ouverture d'évacuation d'air pour ledit circuit, l'ouverture d'admission étant alors en liaison avec l'aspiration du ventilateur.

Dans le dispositif ainsi conçu, l'air chaud circule donc en espace clos sans affecter la température du milieu extérieur, ce qui permet de conserver, pour le personnel de service, une atmosphère de travail saine et agréable.

Certes, le circuit de déplacement d'air peut avoir à être ouvert de temps à autre sur l'atmosphère, au travers du moyen de mise en communication, mais seulement pendant la courte phase de refroidissement du traitement thermique ou de brèves périodes de remise en pression du circuit, ce qui bien entendu ne peut avoir de conséquences sur la température de l'environnement.

La phase de refroidissement, déjà réduite en durée par le fait que l'air extérieur n'est pas réchauffé, peut encore être accélérée par l'utilisation d'un groupe de refroidissement placé face à l'ouverture d'admission d'air. Pour leur part, les phases de chauffage seront avantageusement mises en oeuvre à l'aide d'une résistance électrique chauffante retenue dans le refoulement du ventilateur.

En variante, l'invention prévoit également de ras sembler le ventilateur, le moyen de chauffage et le groupe de refroidissement sous la forme d'une unité du type climatiseur.

Dans un premier mode de réalisation qui semble devoir être retenu à titre préférentiel comme étant le plus performant, ledit circuit de déplacement d'air comprend en plus de l'enceinte, un tronçon extérieur raccordé à celle-ci par ses deux bouts et incluant le ventilateur avec son moyen de chauffage, ainsi que le moyen de mise en communication sélective.

Dans ce cas, ledit moyen de mise en communication sélective sera, selon une conception simple et de mise en oeuvre aisée, constitué de préférence par un clapet fermant une lumière ménagée dans un coude d'un conduit constituant une partie au moins dudit tronçon extérieur du circuit fermé de déplacement d'air, ce clapet étant monté pivotant pour, en position active ouverte, s'appliquer contre la paroi intérieure du coude et venir se placer dans un plan subdivisant la lumière en deux ouvertures communiquant respectivement, par les branches associées du conduit partant du coude, avec l'aspiration du ventilateur et l'enceinte, afin de constituer lesdites ouvertures d'admission et d'évacuation d'air.

Avantageusement, il est en outre prévu un déflecteur en forme de V dont la pointe est positionnée face à la lumière, dans le plan d'ouverture du clapet, pour, de chaque côté de ce clapet en position ouverte, canaliser parfaitement l'air aspiré par le ventilateur à travers l'ouverture d'admission et respectivement l'air refoulé à travers l'ouverture d'évacuation.

Par ailleurs, pour simplifier le montage du ventilateur, il est prévu selon l'invention que celui-ci constitue un second coude du conduit en se raccordant à ce dernier par son aspiration et à l'enceinte par son refoulement.

Selon un second mode de réalisation du dispositif de traitement thermique selon l'invention, ledit circuit de déplacement d'air est uniquement constitué par l'enceinte fermée à l'intérieur de laquelle le ventilateur est installé dans une position excentrée.

Dans ce cas, le moyen de mise en communication sélective pourra être avantageusement constitué par une tôle obturatrice montée coulissante à l'intérieur de l'enceinte, le long d'une paroi de celle-ci, dans laquelle sont ménagées lesdites ouvertures d'admission et d'évacuation, cette tôle présentant elle-même deux lumières qui, dans la position active de la tôle, viennent s'aligner respectivement avec les ouvertures d'admission et d'évacuation, la première au moins de ces lumières étant en outre aménagée pour assurer l'accouplement de l'ouverture d'admission à l'aspiration du ventilateur dans ladite position active.

La présente invention couvre également une installation pour confectionner des articles de confiserie, notamment par enrobage ou moulage, à partir d'un liquide de confiserie solidifiable, tel que du chocolat fondu, qui est équipée d'un dispositif de traitement thermique, tel que défini ci-dessus, dont l'espace de réception du liquide de confiserie est constitué, pour partie au moins, par une cuve d'où des moyens sont prévus pour remonter ledit liquide jusqu'à un distributeur surplombant une grille placée au-dessus de la cuve.

Dans le cas où les moyens de remontée du liquide de confiserie sont constitués par une pompe dont l'aspiration est raccordée audit espace de réception de liquide du dispositif de traitement thermique et dont le refoulement se prolonge par un tube d'alimentation du distributeur en liquide de confiserie, l'invention prévoit en outre que la pompe soit logée à l'intérieur du circuit fermé de déplacement d'air du dispositif de traitement thermique. Additionnellement, le tube d'alimentation peut être avantageusement pourvu d'une double enveloppe dont le volume intérieur communique avec celui du circuit fermé de déplacement d'air du dispositif de traitement thermique ou d'un circuit fermé de déplacement d'air identique ménagé dans une enceinte indépendante.

Ces deux dispositions permettent sans consommation d'énergie extérieure ou avec une consommation minimum, de maintenir en température le liquide de confiserie à l'intérieur de la pompe et du tube de remontée. Ce système de réchauffage à l'aide de l'air chaud circulant dans l'enceinte n'est pas exposé par ailleurs aux risques de fuite que l'on rencontre avec les systèmes traditionnels à refroidissement par eau qui, de surcroît nécessitent l'utilisation d'une pompe supplémentaire de circulation d'eau.

Deux modes de réalisation du dispositif de traitement thermique selon l'invention et d'une enrobeuse équipée d'un tel dispositif vont maintenant être décrits plus en détail, mais uniquement à titre d'exemples non-limitatifs, en référence aux dessins annexés dans lesquels :
- la figure 1 est une vue schématique en coupe verticale transversale d'une enrobeuse d'un premier type fonctionnant avec un dispositif de traitement thermique conforme au premier mode de réalisation de l'invention ;
- les figures 2 et 3 sont des vues en coupe longitudinale horizontale de ce dispositif, faites dans le plan de son circuit de déplacement d'air, pour illustrer respectivement ses deux états principaux de fonctionnement ;
- les figures 4 et 5 sont des agrandissements respectifs des parties encerclées de traits mixtes sur les figures 2 et 3 ;
- les figures 6 et 7 sont des vues en coupe horizontale d'un dispositif de traitement thermique conforme au deuxième mode de réalisation de l'invention, en illustrant respectivement les deux états de fonctionnement ; et
- la figure 8 est une vue schématique en coupe verticale transversale d'une enrobeuse d'un second type conforme à l'invention, équipée d'un dispositif de traitement thermique selon la figure 2 ou 4.

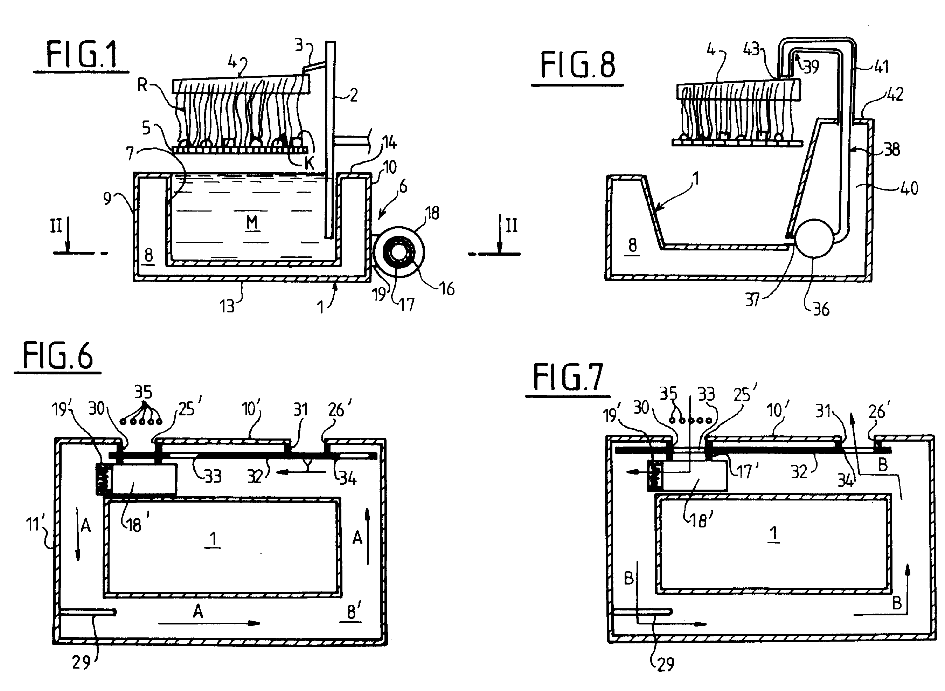

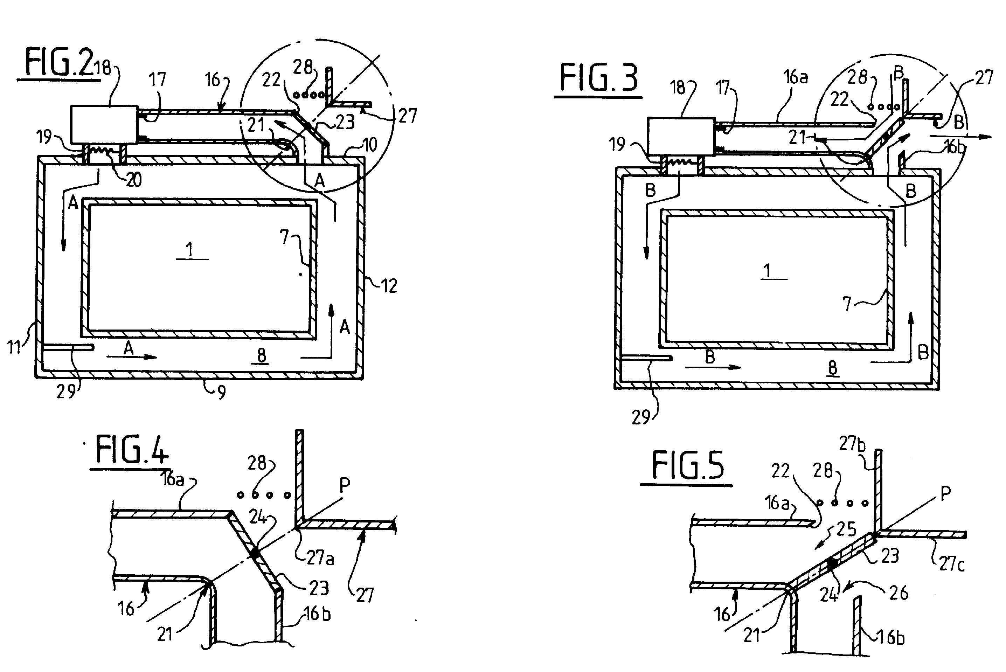

La figure 1 illustre schématiquement une enrobeuse de bonbons de confiserie, de conception générale traditionnelle, comportant en position basse une cuve 1 de réception d'une masse M de chocolat fondu de couverture dans laquelle plonge la partie inférieure d'un disque rotatif vertical 2. A chaque rotation, ce disque 2 se recouvre d'une couche de chocolat, détachée ensuite en partie haute par une raclette 3 déviant en permanence du chocolat fondu vers un distributeur latéral 4 en forme de déflecteur. Celui-ci, ainsi alimenté en continu, forme alors un rideau vertical R de chocolat fondu que traversent les bonbons K à enrober, transportés sur une grille sans fin mobile 5 passant au-dessus de la cuve 1 qui récupère ainsi le chocolat fondu en excès.

La cuve 1 appartient plus précisément à un dispositif 6 de traitement thermique de la masse M de chocolat fondu, visible également sur la figure 2, dans lequel sa paroi 7 est entièrement entourée d'une enceinte fermée 8 formant double enveloppe, elle-même délimitée par une paroi frontale 9, une paroi arrière 10, deux parois latérales 11,12, une paroi de fond 13 et une paroi supérieure 14 définissant une collerette autour de la face supérieure ouverte de la cuve 1.

Selon le premier mode de réalisation de l'invention, illustré par les figures 1 et 2, un conduit coudé 16 débouche dans l'enceinte 8, sur sa paroi arrière 10 et à proximité de l'une 12 de ses parois latérales. Ce conduit 16 se raccorde de l'autre côté à l'embout d'aspiration 17 d'un ventilateur 18 dont l'embout de refoulement 19 débouche dans l'enceinte 8, en étant soudé à la paroi arrière 10 de cette dernière, non loin de sa seconde paroi latérale 11 . Comme le montre la figure 2, une résistance chauffante électrique 20 est en outre retenue à l'intérieur de l'embout de refoulement 19 du ventilateur 18.

Sur la figure 2 et son agrandissement partiel de la figure 4, on peut encore voir que, sur son côté extérieur, le coude 21 du conduit 16 est percé d'une lumière 22 obturée par un clapet 23 monté pivotant autour d'un axe vertical 24 situé dans le plan de symétrie P de la lumière 22. Le positionnement de l'axe 24 et les dimensions du clapet 23 sont tels que, dans sa position d'ouverture maximum illustrée par les figures 3 et 5, ce dernier, alors placé dans le plan P, s'applique étroitement contre toute la paroi intérieure du coude 21 . Dans cette position, le clapet 23 cloisonne la lumière 22 et le coude 21 en une ouverture d'admission d'air 25 se raccordant à l'aspiration 17 du ventilateur 18 par la longue branche 16a du conduit 16 et en une ouverture d'évacuation d'air 26 communiquant quant à elle avec le volume intérieur de l'enceinte 8 par la courte branche 16b du même conduit.

On observera encore sur les figures 2 et 4 qu'un déflecteur 27 en forme de V est placé en face de la lumière 22, avec sa pointe 27a dirigée vers celle-ci et positionnée dans son plan de symétrie P, pour, dans la position ouverte du clapet 23, illustrée par les figures 3 et 5, prolonger ce dernier, par ses ailes 27b et 27c, en amont respectivement de l'ouverture d'admission 25 et de l'ouverture d'évacuation 26. Par ailleurs, un groupe de refroidissement, ici constitué par un réseau de tubes réfrigérants 28 est installé face à l'ouverture d'admission 25.

Le dispositif qui vient d'être décrit est piloté par un régulateur de commande automatique permettant la mise en oeuvre d'une procédure de traitement thermique ou "tempérage", qui se déroule de la façon suivante.

Dans une première phase, dite de fonte du chocolat, l'enceinte 8 et le conduit 16 étant remplis d'air ambiant et le clapet 23 fermé (figures 2 et 4), la résistance 20 est activée et le ventilateur 18 mis en service. L'air, qui se chauffe progressivement au contact de la résistance 20, est ainsi mis en circulation dans le sens des flèches A de la figure 2, à l'intérieur d'un circuit fermé constitué par l'enceinte 8 et le conduit 16. Par un échange thermique réalisé à travers la paroi 7 de la cuve 1, l'air ainsi chauffé élève la température du chocolat présent dans cette dernière, initialement à l'état solide. Quand la température de l'air en circulation a atteint un niveau assurant la fonte du chocolat (environ 45°C), l'alimentation électrique de la résistance 20 est coupée par une sonde 29 installée à l'intérieur de l'enceinte 8.

A cet instant débute une seconde phase du traitement thermique,, dite de refroidissement du chocolat fondu. Le clapet 23 est tout d'abord ouvert et placé dans sa position des figures 3 et 5, et le groupe de refroidissement 28 est mis en service. Dès lors, le ventilateur 18, toujours en fonctionnement, aspire à travers ce dernier, l'ouverture d'admission 25 et la longue branche 16a du conduit 16, une veine d'air canalisée au départ par l'aile 27b du déflecteur. L'air ainsi refroidi et refoulé dans l'enceinte 8 par le ventilateur 18 suit le trajet fléché B avant de ressortir dans l'atmosphère par la courte branche 16b du conduit, l'ouverture d'évacuation 26 et le long de la seconde branche 27c du déflecteur 27.

Une fois que la température de refroidissement prescrite (environ 27°C) est atteinte, la sonde 29 remet en service la résistance chauffante 20 et le clapet 23 est simultanément refermé, pour la mise en oeuvre de la troisième phase du traitement, dite de remontée et de maintien en température du chocolat fondu (jusqu'à 31°C environ), qui se poursuit pendant toute la période d'utilisation de l'enrobeuse.

Comme on le sait, ce traitement thermique en trois phases a pour effet de "cristalliser" le chocolat, c'est-à-dire de lui donner la meilleure consistance qui soit en vue d'un enrobage de haute qualité. Par ailleurs, avec le dispositif selon l'invention, les première et troisième phases de chauffage se déroulent en circuit fermé et donc sans altérer la température du local de travail, même si de temps à autre il convient d'ouvrir légèrement le clapet 23 pour maintenir une pression suffisante à l'intérieur de l'enceinte 8. En définitive, le clapet 23 ne s'ouvre complètement qu au cours de la deuxième phase de refroidissement ce qui est bien entendu sans conséquence sur le confort du personnel de service.

Le deuxième mode de réalisation du dispositif de traitement thermique selon l'invention, illustré par la figure 6, se distingue du premier par le simple fait que le ventilateur 18', avec sa résistance chauffante 20', est ici entièrement logé à l'intérieur de l'enceinte 8', dans un coin inférieur arrière de celle-ci avec son refoulement 19 dirigé vers sa paroi latérale la plus proche 11'. L'enceinte 8' définit ici à elle-seule, autour de la cuve 1, le circuit de déplacement d'air.

Dans ce deuxième mode de réalisation, la paroi arrière 10' de l'enceinte 8' est percée de deux ouvertures circulaires, l'une 25' située en face de l'embout d'aspiration 17' du ventilateur 18' et la seconde 26' ménagée à l'autre bout de la paroi 10'. Ces ouvertures 25' ,26', chacune cerclée par ailleurs d'un manchon 30 ou 31 débordant à l'intérieur de la paroi 10', sont, en phase de chauffage du dispositif, obturées par une tôle verticale coulissante 32 qui s'insère étroitement entre l'embout d'aspiration 17' du ventilateur 18' et le manchon 30 de l'ouverture 25' située en regard. La tôle 32 est elle-même pourvue de deux lumières circulaires 33,34 qui, à la suite d'un coulissement horizontal symbolisé par la flèche Y sur la figure 6, viennent s'aligner respectivement avec les manchons 30,31 des ouvertures 25' ,26', comme représenté sur la figure 7, en vue de la mise en oeuvre de la phase de refroidissement. Dès lors l'ouverture 25' constitue l'ouverture d'admission d'air ambiant refroidi éventuellement par des tubes réfrigérants 35, cette ouverture étant raccordée à l'aspiration 17' du ventilateur 18', tandis que la seconde ouverture 26' constitue l'ouverture d'évacuation de l'air ayant circulé à travers l'enceinte 8'.

La figure 8 représente une variante de l'enrobeuse de la figure 1, dans laquelle le disque rotatif 2, a été remplacé par une pompe 36 dont l'aspiration est raccordée au fond de la cuve 1, par un conduit 37, et dont le refoulement se prolonge par un tube vertical 38 de remontée du chocolat, se terminant au-dessus du distributeur 4 tout en se recourbant en 39 vers celui-ci. Selon l'invention, dans l'enrobeuse de la figure 8, qui peut être équipée de l'un ou l'autre des dispositifs de traitement thermique décrits ci-dessus, la pompe 36 est logée dans la partie arrière 40, surdimensionnée en largeur et en hauteur, de l'enceinte 8 et le tube vertical 38 est, sur son tronçon extérieur à ladite partie arrière, muni d'une double enveloppe 41 soudée à la paroi supérieure 42 de celle-ci. L'espace annulaire délimité par cette double enveloppe du tube 38 communique avec le volume intérieur de l'enceinte 8 et, à son extrémité libre 43, s'ouvre sur l'atmosphère. Grâce à ces dispositions, on peut avantageusement utiliser l'air chaud présent la plupart du temps à l'intérieur de l'enceinte, pour maintenir le chocolat en fusion à l'intérieur de la pompe 36 et du tube 38.

Bien entendu, on peut également à titre de variante, raccorder la double enveloppe du tube d'alimentation 38 à une enceinte fermée indépendante de celle 8 du dispositif de traitement et dans laquelle une mise en circulation d'air chaud sera réalisée à l'aide soit des moyens décrits en liaison avec les figures 2 à 5, soit des moyens décrits en liaison avec les figures 6 et 7.

## Revendications

1. Dispositif de traitement thermique d'un produit liquide solidifiable, en particulier d'un produit de confiserie liquéfié, tel que du chocolat fondu, du type comprenant un espace de réception (1) dudit produit liquide (M) défini par une paroi (7) d'échange thermique avec au moins une enceinte environnante (8;8') dans laquelle de l'air peut être déplacé par un ventilateur (18,18') associé à un moyen de chauffage (20), caractérisé en ce que le ventilateur (18;18') est inséré, avec le moyen de chauffage (20), à l'intérieur d'un circuit fermé de déplacement d'air, constitué en partie au moins par ladite enceinte (8;8') et associé à un moyen de mise en communication sélective (23,32) avec l'atmosphère conçu pour, en position active, libérer une ouverture d'admission (25;25') et une ouverture d'évacuation d'air (26;26'), l'ouverture d'admission étant alors en liaison avec l'aspiration (17;17') du ventilateur (18;18').

2. Dispositif de traitement thermique selon la revendication 1, caractérisé en ce que ledit circuit de déplacement d'air comprend en plus de l'enceinte (8), un tronçon extérieur raccordé à celle-ci par ses deux bouts et incluant le ventilateur (18) et son moyen de chauffage ainsi que le moyen de mise en communication sélective (23).

3. Dispositif de traitement thermique selon la revendication 2, caractérisé en ce que ledit tronçon extérieur comprend un conduit (16) présentant un coude (21) dans lequel est ménagée une lumière (22) fermée par un clapet (23) constituant ledit moyen de mise en communication sélective, ce clapet étant monté pivotant pour, en position active ouverte, s'appliquer contre la paroi intérieure du coude (21) et venir se placer dans un plan (P) subdivisant la lumière (22) en deux ouvertures (25,26) communiquant respectivement, par les branches (16a,16b) associées du conduit (16) partant du coude (21), avec l'aspiration (17) du ventilateur (18) et l'enceinte (8), afin de constituer lesdites ouvertures d'admission et d'évacuation.

4. Dispositif de traitement thermique selon la revendication 3, caractérisé en ce qu'il comprend un déflecteur (27) en forme de V dont la pointe (27a) est positionnée face à la lumière (22), dans le plan (P) d'ouverture du clapet (23).

5. Dispositif de traitement thermique selon la revendication 3 ou 4, caractérisé en ce que le ventilateur (18) constitue un second coude du conduit (16) en se raccordant à ce dernier par son aspiration (17) et à l'enceinte (8) par son refoulement (19).

6. Dispositif de traitement thermique selon la revendication 1, caractérisé en ce que ledit circuit de déplacement d'air est uniquement constitué par l'enceinte fermée (8') à l'intérieur de laquelle le ventilateur (18') est installé dans une position excentrée.

7. Dispositif de traitement thermique selon la revendication 6, caractérisé en ce que le moyen de mise en communication sélective est constitué par une tôle obturatrice (32) montée coulissante à l'intérieur de l'enceinte, le long d'une paroi (10') de celle-ci, dans laquelle sont ménagées lesdites ouvertures d'admission (25') et d'évacuation (26'), cette tôle (32) présentant elle-même deux lumières (33,34) qui, dans la position active de la tôle, viennent s'aligner respectivement avec les ouvertures d'admission et d'évacuation, la première au moins de ces lumières (33), étant en outre aménagée pour assurer l'accouplement de l'ouverture d'admission (25') à l'aspiration (17') du ventilateur (18) dans ladite position active.

8. Dispositif de traitement thermique selon l'une quelconque des revendications 1 à 7, caractérisé en ce qu'il comprend un groupe de refroidissement (28;35) placé en face de l'ouverture d'admission (25;25').

9. Dispositif de traitement thermique selon l'une quelconque des revendications 1 à 8, caractérisé en ce que le moyen de chauffage est constitué par une résistance électrique chauffante (20) retenue dans le refoulement (18;18') du ventilateur (17;17').

10. Dispositif de traitement thermique selon quelconque des revendications 1 à 7, caractérisé en ce que le ventilateur (17;17') et le moyen de chauffage sont rassemblés en une unité du type climatiseur à groupe de refroidissement intégré.

11. Installation pour confectionner des articles de confiserie, notamment par enrobage ou moulage, à partir d'un liquide de confiserie solidifiable, tel que du chocolat fondu, cette installation comprenant un distributeur (4) de liquide de confiserie qui surplombe une grille (5) placée au-dessus d'une cuve (1) appartenant à un dispositif de traitement thermique (6) d'une masse principale de liquide de confiserie (M), d'où des moyens (2;36,38) sont prévus pour remonter ledit liquide jusqu'au distributeur, caractérisée en ce que le dispositif de traitement thermique (6) est constitué par celui défini dans l'une quelconque des revendications 1 à 10, dont l'espace de réception du liquide est, pour partie au moins, formé par la cuve (1).

12. Installation selon la revendication 11, dans laquelle les moyens de remontée du liquide de confiserie sont constitués par une pompe (36) dont l'aspiration est raccordée audit espace de réception de liquide (1) du dispositif de traitement thermique (6) et dont le refoulement se prolonge par un tube (38) d'alimentation du distributeur en liquide de confiserie, caractérisée en ce que ladite pompe (36) est logée à l'intérieur du circuit fermé de déplacement d'air du dispositif de traitement thermique (6).

13. Installation selon la revendication 12, caractérisée en ce que ledit tube d'alimentation (38) est pourvu d'une double enveloppe (41) dont le volume intérieur communique avec celui du circuit fermé de déplacement d'air du dispositif de traitement thermique (6) ou d'un circuit fermé de déplacement d'air identique ménagé dans une enceinte indépendante.

## Patentansprüche

1. Vorrichtung zur Wärmebehandlung eines erstarrbaren flüssigen Produkts, insbesondere eines verflüssigten Süßwarenprodukts wie geschmolzener Schokolade, des Typs, der einen Aufnahmeraum (1) des genannten flüssigen Produkts (M) enthält, begrenzt durch eine Wärmetauscherwand (7) mit wenigstens einer Umschließung (8, 8'), in der Luft bewegt werden kann mittels eines mit einer Heizeinrichtung (20) verbundenen Ventilators (18, 18'), dadurch **gekennzeichnet**,
daß der Ventilator (18, 18') mit der Heizeinrichtung (20) eingebaut ist in das Innere eines geschlossenen Luftstromkreises, wenigstens teilweise gebildet aus der genannten Umschließung (8, 8') und verbunden ist mit einer wahlweise verstellbaren Verbindungseinrichtung (23, 32) mit der Außenluft, so beschaffen, daß sie in aktiver Stellung eine Lufteinlaßöffnung (25, 25') und eine Luftauslaßöffnung (26, 26') freigibt, wobei die Einlaßöffnung dann in Verbindung steht mit der Ansaugung (17, 17') des Ventilators (18, 18').

2. Wärmebehandlungsvorrichtung nach Anspruch 1, dadurch gekennzeichnet, daß der genannte Luftstromkreis außer der Umschließung (8) einen Außenteilabschnitt aufweist, der an diese mit seinen beiden Enden angeschlossen ist und den Ventilator (18) und seine Heizeinrichtung enthält, sowie die wahlweise verstellbare Verbindungseinrichtung (23).

3. Wärmebehandlungsvorrichtung nach Anspruch 2, dadurch gekennzeichnet, daß der genannte Außenteilabschnitt eine Leitung (16) enthält, die einen Krümmer (21) aufweist, in dem ein Luftdurchlaß (22) angebracht ist, verschlossen durch eine Klappe (23), welche die genannte wahlweise verstellbare Verbindungseinrichtung bildet, wobei die Klappe schwenkbar montiert ist, um sich in der aktiven offenen Position der Innenwand des Krümmers (21) anzupassen in einer Ebene (P), die den Luftdurchlaß (22) in zwei Öffnungen (25, 26) unterteilt, die durch die verbundenen Zweige (16a, 16b) der Leitung (16), ausgehend vom Krümmer (21), mit der Ansaugung (17) des Ventilators (18) bzw. der Umschließung (8) kommunizieren, um die genannten Öffnungen für Einlaß und Auslaß zu bilden.

4. Wärmebehandlungsvorrichtung nach Anspruch 3, dadurch gekennzeichnet, daß sie ein V-förmiges Umlenkblech (27) enthält, dessen Kante vor dem Durchlaß (22) angebracht ist in der Öffnungsebene (P) der Klappe (23).

5. Wärmebehandlungsvorrichtung nach Anspruch 3 oder 4, dadurch gekennzeichnet, daß der Ventilator (18) einen zweiten Krümmer der Leitung (16) bildet, indem er an letztere mit seiner Saugseite (17) angeschlossen ist, und an die Umschließung (8) mit seiner Druckseite (19).

6. Wärmebehandlungsvorrichtung nach Anspruch 1, dadurch gekennzeichnet, daß der Luftstromkreis nur aus der geschlossenen Umschließung (8') besteht, in deren Innerem der Ventilator (18') in einer exzentrischen Position installiert ist.

7. Wärmebehandlungsvorrichtung nach Anspruch 6, dadurch gekennzeichnet, daß die wahlweise verstellbare Verbindungseinrichtung aus einem Verschlußblech (32) besteht, das verschiebbar im Innern der Umschließung angebracht ist, längs einer Wand (10') von dieser, in der die genannten Öffnungen für Einlaß (25') und Auslaß (26') angebracht sind, wobei dieses Blech (32) selbst zwei Durchlässe (33, 34) aufweist, die in der aktiven Position des Blechs mit den Öffnungen für Einlaß bzw. Auslaß fluchten, wobei wenigstens der erste dieser Durchlässe (33) überdies eingerichtet ist, um in der genannten aktiven Stellung die Kupplung der Einlaßöffnung (25') mit der Ansaugung (17') des Ventilators (18) zu gewährleisten.

8. Wärmebehandlungsvorrichtung nach irgendeinem der Ansprüche 1 bis 7, dadurch gekennzeichnet, daß sie eine Kühlgruppe (28, 35) enthält, die vor der Ansaugöffnung (25, 25') angebracht ist.

9. Wärmebehandlungsvorrichtung nach irgendeinem der Ansprüche 1 bis 8, dadurch gekennzeichnet, daß die Heizeinrichtung aus einem heizenden elektrischen Widerstand (20) besteht, angebracht auf der Druckseite (18, 18') des Ventilators (17, 17').

10. Wärmebehandlungsvorrichtung nach irgendeinem der Ansprüche 1 bis 7, dadurch gekennzeichnet, daß der Ventilator (17, 17') und die Heizeinrichtung zusammengefaßt sind zu einer Einheit des Typs Klimagerät mit integrierter Kühlgruppe.

11. Anlage zum Herstellen von Süßwaren, vor allem durch Überzug oder Guß, aus einer erstarrbaren Süßwarenflüssigkeit, wie etwa geschmolzene Schokolade, wobei diese Anlage einen Verteiler (4) für Süßwarenflüssigkeit enthält, der über einem Gitter (5) hängt, das über einer Wanne (1) angebracht ist, die zu einer Wärmebehandlungsvorrichtung (6) einer Süßwarenflüssigkeits-Hauptmasse (M) gehört, wo Mittel (2, 36, 38) vorgesehen sind, um die genannte Flüssigkeit bis zum Verteiler anzuheben, dadurch gekennzeichnet, daß die Wärmebehandlungsvorrichtung (6) gebildet wird durch die in irgendeinem der Ansprüche 1 bis 10 definierte, deren Aufnahmeraum für die Flüssigkeit, zumindest teilweise, durch die Wanne (1) gebildet wird.

12. Anlage nach Anspruch 11, dadurch gekennzeichnet, daß die Hebemittel für die Süßwarenflüssigkeit bestehen aus einer Pumpe (36), deren Ansaugung an dem genanntem Flüssigkeits-Aufnahmeraum (1) der Wärmebehandlungsvorrichtung (6) angeschlossen ist und deren Druckseite verlängert wird durch ein Versorgungsrohr (38) für den Verteiler der Süßwarenflüssigkeit, dadurch gekennzeichnet, daß die genannte Pumpe (36) im Innern des geschlossenen Luftstromkreises der Wärmebehandlungsvorrichtung (6) untergebracht ist.

13. Anlage nach Anspruch 12, dadurch gekennzeichnet, daß das genannte Versorgungsrohr (38) mit einer doppelten Hülle (41) versehen ist, deren Innenraum mit dem des geschlossenen Luftstromkreises der Wärmebehandlungsvorrichtung (6) oder mit einem in einem unabhängigen Behälter untergebrachten identischen geschlossenen Luftstromkreis kommuniziert.

## Claims

1. Device for the heat treatment of a solidifiable liquid product, particularly of a liquefied confectionary product such as melted chocolate, of the type comprising a space (1) for receiving the said liquid product (M), defined by a heat exchange wall (7) with at least one surrounding chamber (8; 8') in which the air may be moved by a fan (18; 18') associated with heating means (20), characterised in that the fan (18, 18') is inserted, with the heating means (20), inside a closed air movement circuit, consisting partly of at least the said chamber (8; 8') and associated with means (23, 32) for selectively connecting to atmosphere designed, in the active position, so as to open up an air inlet opening (25; 25') and an air discharge opening (26; 26'), the inlet opening then being connected to the intake (17; 17') of the fan (18; 18').

2. Heat treatment device according to Claim 1, characterised in that the said air movement circuit comprises, in addition to the chamber (8), an external section connected to the chamber by its two ends and including the fan (18) with its heating means, together with the means of selective connection (23).

3. Heat treatment device according to Claim 2, characterised in that the said external section comprises a duct (16) with an elbow (21) in which is provided a port (22) closed by a valve (23) constituting the said means of selective connection, this valve being mounted pivotably so as to be pressed, in its active open position, against the internal wall of the elbow (21) and come to be positioned in a plane (P) subdividing the port (22) into two openings (25, 26) communicating respectively, through associated branches (16a, 16b) of the duct (16) starting from the elbow (21), with the intake (17) of the fan (18) and the chamber (8), in order to constitute the said air inlet and discharge openings.

4. Heat treatment device according to Claim 3, characterised in that it comprises a V-shaped deflector (27), the tip (27a) of which is positioned opposite the port (22), in the plane (P) of opening of the valve (23).

5. Heat treatment device according to Claim 3 or 4, characterised in that the fan (18) constitutes a second elbow of the duct (16), being connected to the latter by its intake (17) and to the chamber (8) by its exhaust (19).

6. Heat treatment device according to Claim 1, characterised in that the said air movement circuit consists solely of the closed chamber (8') inside which the fan (18') is installed in an off-centre position.

7. Heat treatment device according to Claim 6, characterised in that the means of selective connection consists of a closure plate (32) mounted so as to slide inside the chamber, along one wall (10') of the latter, in which the said inlet (25') and discharge (26') openings are provided, this plate (32) itself having two ports (33, 34) which, in the active position of the plate, come to be aligned respectively with the inlet and discharge openings, at least the first of these ports (33) also being arranged so as to provide the coupling of the inlet opening (25') to the intake (17') of the fan (18) in the said active position.

8. Heat treatment device according to any one of Claims 1 to 7, characterised in that it comprises a cooling unit (28; 35) positioned opposite the inlet opening (25; 25').

9. Heat treatment device according to any one of Claims 1 to 8, characterised in that the heating means consists of an electric heating element (20) fixed in the exhaust (18; 18') of the fan (17; 17').

10. Heat treatment device according to any one of Claims 1 to 7, characterised in that the fan (17; 17') and heating means are brought together in a unit of the air conditioning type with integrated cooling unit.

11. Equipment for making confectionary articles, particularly for enrobing or moulding, from a solidifiable confectionary liquid, such as melted chocolate, this equipment comprising a confectionary liquid distributor (4) projecting over a grid (5) positioned over a tank (1) belonging to a device (6) for the heat treatment of a main mass of confectionary liquid (M), in which means (2; 36, 38) are provided for taking the said liquid up to the distributor, characterised in that the heat treatment device (6) consists of the one defined in any one of Claims 1 to 10, the liquid-receiving space of which is, at least partly, formed by the tank (1).

12. Equipment according to Claim 11, in which the means for taking up the confectionary liquid consists of a pump (36), the intake of which is connected to the said liquid-receiving space (1) of the heat treatment device (6) and the outlet of which is extended by a pipe (38) for feeding the distributor with confectionary liquid, characterised in that the said pump (36) is housed inside the closed air movement circuit of the heat treatment device (6).

13. Equipment according to Claim 12, characterised in that the said feed pipe (38) is provided with a double casing (41), the internal space of which communicates with that of the closed air movement circuit of the heat treatment device (6) or of an identical closed air movement circuit provided in an independent chamber.
